(19)

Europäisches
Patentamt
European
Patent Office
Office européen
des brevets

(11) **EP 4 529 030 A1**

(12) **EUROPEAN PATENT APPLICATION**

(43) Date of publication:
**26.03.2025   Bulletin 2025/13**

(21) Application number: **23198775.1**

(22) Date of filing: **21.09.2023**

(51) International Patent Classification (IPC):
***H04B 7/04*** *(2017.01)*      ***G01S 5/02*** *(2010.01)*

(52) Cooperative Patent Classification (CPC):
**H04B 7/04013; G01S 5/0273; H01Q 3/46;**
**H01Q 15/148**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **DAVIES, Robert James**
  **Eindhoven (NL)**

• **DEES, Walter**
  **Eindhoven (NL)**
• **CRONIN, Harry Michael**
  **Eindhoven (NL)**
• **DUFFY, David Michael**
  **Eindhoven (NL)**
• **WALKER, Nicholas Simon**
  **Eindhoven (NL)**
• **MEUNIER, Ben**
  **Eindhoven (NL)**

(74) Representative: **Philips Intellectual Property &**
**Standards**
**High Tech Campus 52**
**5656 AG Eindhoven (NL)**

(54) **NON-UNIFORM RECONFIGURABLE REDIRECTION DEVICE STATES FOR ENHANCED LOCALIZATION**

(57)      The invention proposes a system and methods by which at least one reconfigurable redirection device is controlled to apply non-uniform phase profiles to enhance localization of a target mobile device by creating a non-planar redirection pattern. Use and change of non-uniform phase profiles during the localization task allows discovery of information about the target mobile device location, such as angle or orientation with respect to the reconfigurable redirection device, using fewer transmissions and/or fewer hardware components.

Fig. 11

EP 4 529 030 A1

**Description**

FIELD OF THE INVENTION

The invention relates to the field of location services for terminal devices including mobile access devices in wireless networks, such as - but not limited to - reconfigurable intelligent surfaces (RISs) or other reconfigurable redirection devices (RRDs).

BACKGROUND OF THE INVENTION

Various localization techniques can be used within cellular networks such as the 5G system, using combinations of timing, angle, signal strength, or other data to allow a mobile terminal's location to be determined, either by the mobile terminal (e.g., user equipment (UE) in 5G terminology) itself or by a network entity such as a base station (e.g., gNB in 5G terminology) or other access point. Auxiliary components, such as a reconfigurable redirection device (RRD), e.g., an RIS or a network-controlled repeater (NCR), can be provided to assist with localization of the mobile terminal.

Whilst an RIS can be constructed using any technology with appropriate characteristics (e.g., an ability to redirect, that is, reflect or transmit in different configurations radio waves of correct frequencies), the predominant technology used is metamaterial surfaces, or "metasurfaces" in short.

Switchable metasurfaces have been recently developed and offer many possibilities for improving a wireless communication path between an access device (e.g., base station or access point) of a wireless network and a terminal device (e.g., user equipment (UE)). A variety of technologies can be employed to implement such switchable metasurfaces. Generally, electronically switched metasurfaces are employed, but physically moveable reflecting patches are also a viable technology. Metasurfaces may be composed of an array of elements ("meta-atoms") comprising periodic subwavelength metal/dielectric antennas that resonantly couple to the electric or magnetic or both components of the incident electromagnetic fields, exhibiting effective electric (represented by electric permittivity $\varepsilon$) and/or magnetic (represented by magnetic permeability $\mu$) responses not found in nature.

Thus, metasurfaces represent a versatile concept for manipulating electromagnetic waves. Due to the ease of fabrication using planar circuit manufacturing, there is significant application potential for the microwave frequency range. Huygens metasurfaces have received significant attention as they feature near unity transmission and suppress reflection artifacts efficiently.

Metamaterials will be useful in many aspects of e.g. 6G wireless communication solutions. Syed S. Bukhari et al.: "A Metasurfaces Review: Definitions and Applications" provides a review of metasurfaces. Purely passive metasurfaces are useful, but only act as permanent changes to the transmission environment.

A reconfigurable metasurface for mm-wave networks ("mmWall") has been proposed by Kun Woo Cho et al.: "mmWall: A Reconfigurable Metamaterial Surface for mmWave Networks", which is a tunable smart surface made of metamaterial which, unlike a conventional wireless relay system, does not have transmitting and receiving antennas, nor an amplifier. Once the incoming beam hits the metasurface, it naturally redirects the beam into a desired direction, regardless of whether the transmitter and receiver are located in the same room ("mirror" mode) or in a different room ("lens" mode). Also, it can split the incoming signal into multiple beams and concurrently steer the multi-armed beams. The authors used "Huygen's metasurfaces" to implement their design.

Furthermore, large intelligent surfaces (LIS) and a model for integration of base stations and LIS to determine the benefits of different proportions of each in a communications network has been disclosed in Yongxu Zhu et al.: "Stochastic Geometry Analysis of Large Intelligent Surface-Assisted Millimeter Wave Networks". They concluded that, where there are a limited number of base stations, the contribution of LIS is good, but this is not the case where there are very many base stations serving users.

Moreover, in Jun Zhao et al.: "A Survey of Intelligent Reflecting Surfaces (IRSs): Towards 6G Wireless Communication Networks", the authors term the surfaces "Intelligent Reflecting Surfaces" and the behavior is limited to reflection rather than both reflection and transmission.

Low-capability and/or single-antenna device localization techniques require improvements to reach desired localization precision levels. This may be achieved by combining localization techniques with RISs or other RRDs (such as NCRs) to provide RRD-aware localization. However, known RRD-aware localization techniques may place higher processing burdens on involved user terminals.

SUMMARY OF THE INVENTION

It is an object of the present invention to enhance network control of wireless communication for improved localization of mobile devices.

This object is achieved by an apparatus as claimed in claim 1, by an access device as claimed in claim 7, by a reconfigurable redirection device as claimed in claim 8, by a system as claimed in claim 10, by a method as claimed in claim 15, and by a computer program product as claimed in claim 16.

According to a first aspect related to a reconfigurable redirection device (e.g., an RIS or an NCR) or an access device (e.g. base station (gNB) or access point), an apparatus is provided for supporting localization of a mobile device in a wireless network, the apparatus being configured to set up a reflection and/or deflection profile of array elements of at least one reconfigurable redirection device in the wireless network to create a non-planar spatial redirection pattern of the at least one reconfigurable redirection device.

According to a second aspect related to the reconfigurable redirection device (e.g., an RIS or an NCR) or the access device (e.g. base station (gNB) or access point), a method is provided for supporting localization of a mobile device in a wireless network, the method comprising setting up a reflection and/or deflection profile of array elements of at least one reconfigurable redirection device in the wireless network to create a non-planar spatial redirection pattern of the at least one reconfigurable redirection device.

According to a third aspect, a reconfigurable redirection device (e.g., an RIS or an NCR) is provided, which comprises an apparatus of the first aspect.

According to a fourth aspect, an access device (e.g. base station (gNB) or access point) is provided, which comprises the apparatus of the first aspect.

According to a fifth aspect, a location system for localizing a mobile device in a wireless network is provided, which comprises an apparatus of the first aspect, a localization function for determining a location of the mobile device, a phase profile design system for translating a desired non-planar spatial redirection pattern to a spatial non-uniform phase profile that can be implemented by the reconfigurable redirection device.

Finally, according to a sixth aspect, a computer program product is provided, which comprises code means for producing the steps of the method of the second aspect when run on a computer device.

Accordingly, in order to steer an impinging beam or signal along a non-planar redirection pattern a reconfigurable redirection device is configured to display a non-planar reflection and/or deflection profile or characteristic by applying non-uniform phase profiles to support localization of a nearby mobile device (e.g., UE). The proposed use of non-uniform phase profiles enables discovery of information about the location of the mobile device, such as angle or orientation with respect to the reconfigurable redirection device, using fewer transmissions and/or fewer hardware components (e.g., one reconfigurable redirection device can be used instead of two reconfigurable redirection devices). Additionally, by using a change of phase profiles during a localization task, additional location information can be obtained. Thereby, processing burden can be released from the mobile device in such scenarios.

The reconfigurable redirection device can be implemented by an RIS configured to display a reflection and/or deflection profile that reflects or deflects an impinging beam from the access device (e.g., gNB) or terminal device (e.g., UE) into a desired non-planar redirection pattern or characteristic.

The reconfigurable redirection device can be implemented by an NCR fitted with an antenna array comprising multiple antenna elements with beam profiles that emulate (operate as, function as, create) a desired non-planar redirection pattern or characteristic (reflection or deflection profile). An NCR may not only reflect/redirect beams received from an access device or terminal device, but also signals which may have an omnidirectional propagation path (e.g., transmitted using an omnidirectional antenna).

Thus, design and application of non-uniform spatial phase profiles at the reconfigurable redirection device is a useful enhancement for localization tasks. Localization methods may be used in the presence of one or more reconfigurable redirection devices with controllable non-uniform spatial phase profiles to advantageously to solve problems of conventional localization systems.

According to a first option which may be combined with any of the above first to sixth aspects, the reflection and/or deflection profile of the array elements may be set up by controlling a spatial phase shift profile of the array elements to obtain a non-uniform spatial phase shift profile. Thus, individual phase profiles can be provided (stored) for different desired non-planar redirection patterns.

According to a second option which may be combined with the first option or any of the above first to sixth aspects, the spatial phase shift profile of the array elements may be controlled to obtain at least one of a continuous non-linear phase profile and a stacked linear phase profile. Thereby, different redirection patterns can be obtained in a straight-forward manner by changing specific parameters of the continuous non-linear or stacked linear phase profile.

According to a third option which can be combined with the first or second option or any of the above first to sixth aspects, the spatial phase shift profile of the array elements may be controlled to obtain a non-uniform phase profile that renders a reflection and/or deflection profile with a center point or one or more center lines. The center point or center lines facilitate and improve specific localization task.

According to a fourth option which can be combined with any of the first to third options or any of the above first to sixth aspects, the reflection and/or deflection profile of the array elements may be changed during the localization of the mobile device. Thereby, additional valuable information for localization tasks can be obtained.

According to a fifth option which can be combined with any of the first to fourth options or any of the above first to sixth aspects, the reflection and/or deflection profile of the array elements may dynamically by created in response to positioning measurements and feedback from the mobile device. Thus, the non-planar redirection pattern can be adapted dynamically to the current environmental situation.

According to a sixth option which can be combined with any of the first to fifth options or any of the above first to sixth aspects, the reconfigurable redirection device may comprise a reconfigurable intelligent surface or a network-controlled repeater fitted with an antenna array. Thereby, flexible approaches for implementing the location system can be provided.

According to a seventh option which can be combined with any of the first to sixth options or any of the above first to sixth aspects, the mobile device may be configured to use uplink localization and transmit pilot signals towards the reconfigurable redirection device for reflection towards an access device of the wireless network, wherein the apparatus of the first aspect may be configured to use feedback information from the access device to control the reconfigurable redirection device by applying a succession of non-linear phase profiles until a received signal strength at the access device is maximized or minimized. Thereby, relatively fewer signaling rounds are required from the mobile device, which saves time and resources.

According to an eighth option which can be combined with any of the first to seventh options or any of the above first to sixth aspects, the apparatus of the first aspect may be configured to approximately localize the mobile device by applying of a stacked linear phase profile consisting of a small region of a linear phase profile at a center point, surrounded by a divergent or randomly oriented phase profile. Thereby, relatively fewer signaling rounds are required from the mobile device, which saves time and resources.

According to a ninth option which can be combined with any of the first to eighth options or any of the above first to sixth aspects, the apparatus of the first aspect may be configured to apply two stacked linear phase profiles with different center points and to determine an intersection of two reflection or deflection angles that lead to a maximum received signal strength at the mobile device to find the location of the mobile device. Thereby, relatively fewer hardware components are required (i.e., one RIS or NCR instead of two), which may expand the applicability to more situations.

According to a tenth option which can be combined with any of the first to ninth options or any of the above first to sixth aspects, the apparatus of the first aspect may be configured to control the reconfigurable redirection device to reflect or deflect an incident beam from an access device of the wireless network in two directions such that a null is created between two reflection beams, and to steer the two reflection beams across the mobile device, wherein a point of minimum received signal strength at the access device represents an angle at which the null is pointing at the mobile device. This measure allows a more precise determination of azimuth and elevation angles.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the access device of claim 7, the reconfigurable redirection device of claim 8, the system of claim 10, the method of claim 15, and the computer program product of claim 16 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 schematically shows a summarizing architecture of an RRD-aware localization system according to various embodiments;
Fig. 2 schematically shows a process flow diagram of an RRD-aware localization using the architecture of Fig. 1;
Fig. 3 schematically shows a flow diagram of a common initial part of an RIS-aware localization procedure according to various embodiments;
Fig. 4 schematically shows a flow diagram of a subsequent individual part of an RIS-aware uplink localization procedure with terminal beamforming according to a first embodiment;
Fig. 5 schematically shows a flow diagram of a subsequent individual part of an RIS-aware uplink localization procedure without terminal beamforming according to a second embodiment;
Fig. 6 schematically shows a flow diagram of a subsequent individual part of an RIS-aware angle-based downlink localization procedure according to a third embodiment;
Fig. 7 schematically shows spatially uniform phase profiles used to find a strongest localization path from a terminal device to an access point;
Fig. 8 schematically shows spatially non-uniform phase profiles used to localize a terminal device relative to a center line;
Fig. 9 schematically shows stacked linear phase profiles used to provide a moveable center line;
Fig. 10 schematically illustrates how non-parallel rays are reflected from a convex mirror;
Fig. 11 schematically illustrates different phase profiles and related rates of change of a deflection angle;
Fig. 12 schematically illustrates divergent beam steering by moving a center of curvature;
Fig. 13 schematically illustrates convergent beam steering by moving a center of curvature; and

Fig. 14 schematically shows a basic geometry for a base station, a target terminal device and a reconfigurable redirection device with related distances.

## DETAILED DESCRIPTION OF EMBODIMENTS

Embodiments of the present invention are now described based on a cellular network environment, such as 5G. However, the present invention may also be used in connection with other wireless technologies (e.g., IEEE 802.11/Wi-Fi or IEEE 802.15.4/ultra-wideband communication (UWB)) in which reconfigurable redirection devices can be introduced.

Throughout the present disclosure, the abbreviation "gNB" (5G terminology) or "BS" (base station) is intended to mean an access device/point such as a cellular base station or a WiFi access point or a UWB PAN coordinator. The gNB may consist of a centralized control plane unit (gNB-CU-CP), multiple centralized user plane units (gNB-CU-UPs) and/or multiple distributed units (gNB-DUs). The gNB is part of a radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

Furthermore, the terms "base station" (BS) and "network" are often used as synonyms in this disclosure. This means for example that when it is written that the "network" performs a certain operation it may be performed by a CN function of a cellular network, or by one or more base stations that are part of such cellular network, and vice versa. It can also mean that part of the functionality is performed by a CN function of the cellular network and part of the functionality by the base station.

A wide range of names have been given to (large area) surfaces which can passively alter the direction of radio waves impacting on them, but these reflection or transmission properties can be changed and/or switched and/or reconfigured to result in different passive behavior according a "state" they have been set to. These names include intelligent reflective surface (IRS), reconfigurable intelligent surface (RIS), large intelligent surface (LIS), reconfigurable metasurface (RM), programmable metasurface (PM), large intelligent metasurface (LIM), smart reflect-arrays (SRA), software-defined metasurface (SDM), software-defined surface (SDS), passive intelligent surface (PIS), and passive intelligent mirror (PIM). These surfaces may be switchable between different states, where each state reflects or transmits the radio waves in a different way. A difference existing within these types of surfaces is that some have an intrinsic ability to determine signal strengths, for example they include an ability of a receiver as well as a reflector/transmitter, and therefore can act as an independent "relay-like" system, for example performing their own beam path search (albeit with reflected/transmitted signals originating elsewhere). Their similarity to relays enables them to be integrated into communication standards, e.g., cellular standards, as such. Such switchable metamaterial surfaces offer many possibilities for improving the communication path between a base station or other type of access device and a terminal device (e.g., UE).

In the following, the term "reconfigurable intelligent surface" or "RIS" will be used to refer to any of the above surface types. It is to be understood as a surface for control of radio propagation, containing a plurality of individual electronic elements (e.g., "meta-atoms") by which a phase delay can be imparted on an incoming radio frequency (RF) signal or other electromagnetic (EM) signal which is reflected from the surface.

In embodiments, it may be assumed that arrays of RISs are fully passive, that is, they have no intrinsic radio sensing capabilities and therefore cannot themselves perform beam search or similar but can be defined by switching states when commanded to by an external controller and it is the responsibility of the external controller to determine the appropriate state to set the RIS to.

The degree of phase delay, overall surface control, and network communications of an RIS may be handled by a controller ("RIS controller"), which may also contain standardized communications hardware for communicating on a network (for example, the RIS Controller may act as a UE on the 5G network), local processing and memory hardware.

The RIS controller may operate in response to instructions received from a network with which it is associated using, e.g., a control plane link, or operate autonomously., for example, according to a schedule configured by the base station (e.g., gNB) or in response to changing channel conditions. Optionally, the RIS may also respond to signals from the target UE or a third-party device, wherein these signals may be messages (e.g., commands, requests, notifications etc.) directed to the RIS or other pertinent signals monitored or detected by the RIS controller.

The RIS may be classified as appearing either 'large' or 'small' with respect to a node (i.e., a UE or a base station), by comparing the angle $\rho$ subtended by the RIS at that node with respect to the beamwidth in use at the node. When $\rho$ is less than the beamwidth, the RIS can be said to be 'small'. When $\rho$ is greater than the beamwidth, the RIS can be said to be 'large'. This classification affects the options for beam steering. That is, when the RIS is 'large', the node can steer its own beam across the RIS to illuminate different parts of the RIS surface. When the RIS is 'small', this is effectively not possible.

Note that the effective size of the RIS is a function of the physical size of the RIS, the angle of the surface of the RIS with respect to a center line between a respective node and the RIS, the distance between the respective node and the RIS, and the beamwidth of the respective node.

Besides reflecting incident EM radiation (i.e., acting as a mirror), a RIS may alternatively or additionally refract or deflect radiation through it (i.e., act as a lens) also according to a profile. Thus, the RIS may be placed directly in front of an antenna to act as a lens. In such a case, the RIS can be used to perform beamforming of signals passing to and from the antenna. In the below embodiments, the term 'reflect' is to be understood to also includes such transmissive operations.

While signals are assumed to be in the RF frequency range, the same principles disclosed can also be applied to other parts of the electromagnetic spectrum including optical (IR, visible, UV) signals or signals in the terahertz region.

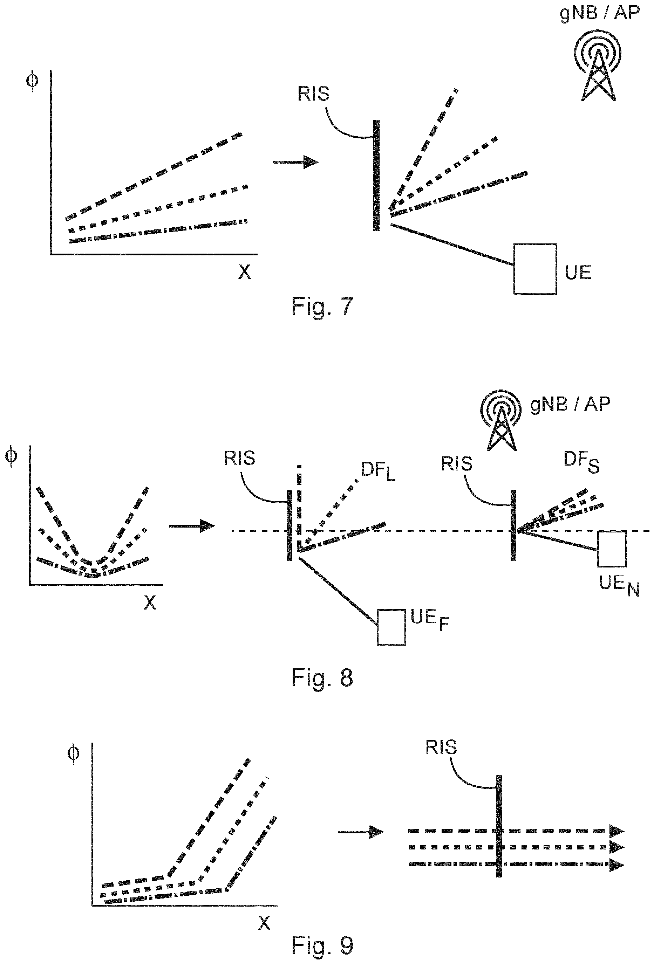

Throughout the disclosed embodiments, a "reflection profile" or "reflection and/or deflection profile" is to be understood as a description (which may be expressed as a matrix, a function or other form of description) which describes the way in which incident rays are reflected or deflected (refracted) from each point of the RIS surface (some examples are illustrated schematically in Figs. 7 to 13 below).

Throughout the disclosed embodiments, a 'redirection pattern' is to be understood as a description of the pattern of the beam leaving the RIS surface. The redirection pattern is a function of the reflection and/or deflection profile and the properties of the impinging beam or signal, where said properties may comprise beam footprint on RIS, footprint location, effective focal length, angle of incidence and, in some cases, frequency or wavelength. In the disclosed embodiments, the redirection pattern is typically considered in the downlink direction, that is, from the base station via a reconfigurable redirection device to the UE. Via reciprocity, the redirection pattern acts as a receiving beam in the uplink direction. In some cases, the redirection pattern may be considered in the uplink direction, that is, as a function of the reflection and/or deflection profile and a beam from the UE.

Throughout the disclosed embodiments, a "phase profile" is to be understood as a matrix or other representation that expresses a relationship between the physical position of a meta-atom on a RIS and the degree of phase delay or advance which is applied by that meta-atom to incoming rays in order to implement a desired reflection profile which causes a corresponding redirection pattern. The RIS controller may be configured to set and/or adjust the phase profiles by controlling the meta-atoms according to parameters given in the matrix.

For convenience, the description often describes operation in terms of the phase profile. While there is a close relationship between the phase profile and the reflection profile, it should be borne in mind that the phase profile required to achieve a certain reflection profile is a function of the RIS implementation. By comparison, the reflection profile offers an implementation-independent description of the RIS configuration that could be transferred to other RIS implementations including RIS implementations based on different methods of achieving reflection profiles.

The phase profiles may be "spatially uniform" profiles, wherein the relationship between the meta-atom's position and the phase delay is a linear function or a constant (i.e., a "linear phase profile"). By applying such a linear phase profile in which all elements apply the same phase shift, the RIS behaves like a planar mirror that can be tilted about a notional center point by changing the phase shift applied. By this means, it is possible to steer an incident EM signal through a range of angles.

Fig. 7 schematically shows an example of spatially uniform phase profiles used to find a strongest localization path (shortest path) from a terminal device to an access point (e.g., gNB), as described later in more detail. The left portion of Fig. 7 shows different spatially uniform phase profiles with different dotted patterns in a diagram of reflection angle $\Phi$ from the RIS versus direction of the x-axis on the RIS surface plane. The right portion of Fig. 7 shows a beam (solid line) from a target UE, that impinges on a certain x-coordinate of the RIS surface plane, and the resultant reflected beams (dotted patterns corresponding to the spatially uniform phase profiles) with different reflection angles as obtained by the phase profiles.

In embodiments, the phase profiles may be "continuous non-linear" profiles, wherein the relationship between the meta-atom's position on the RIS and the phase delay imparted is a continuous non-linear function. With such phase profiles, it is possible to change the width of a reflected beam and thereby provide improved searching capabilities and/or offer path gain over a linear profile. Examples of continuous non-linear functions with a maximum or minimum (including those with a central point of symmetry (or principal axis)) are quadratics, parabolic functions, and the like. These may be used to enable reflection of an impinging ray or beam as a divergent or convergent beam and to steer that beam in different directions.

By way of example, the phase delay imparted by a radially symmetric phase profile may be given by the equation:

$$\phi = k \times r^2$$

where $\phi$ is the degree of phase retardation (or advance), r is the distance from a defined center point, and k is a proportionality constant which, like the co-ordinates of the center point, can be treated as a variable parameter.

Fig. 8 schematically shows examples of such continuous non-linear phase profiles used to localize a terminal device relative to a center line, as described later in more detail. The left portion of Fig. 8 shows different parabolic continuous non-uniform phase profiles with different dotted patterns in a diagram of reflection angle Φ from the RIS versus direction of the x-axis on the RIS surface plane. The right portion of Fig. 8 shows two different examples of a beam (solid line) from a target UE, that impinges on a certain x-coordinate of the RIS surface plane, and the resultant reflected beams (dotted patterns corresponding to the continuous non-uniform phase profiles) with different reflection angles as obtained by the phase profiles. In the left first example, the target UE is located far from the perpendicular center line (dotted line) of the RIS, which results in large differences of the deflection angles. In the right second example, the target UE is located close to the perpendicular center line of the RIS, which results in small differences of the deflection angles.

In other embodiments, the phase profiles may be "stacked linear phase" profiles with discontinuities between two areas or sections of different linear functions or between an area or section of a single linear function and some non-linear or pseudo-random function. By applying a stacked linear phase profile, a sharp discontinuity in reflection angles from the RIS can be applied to signals arriving from a certain direction which may be known to the RIS controller and can be altered by altering the phase profile. By detecting the point at which a signal undergoes a significant change of strength, its angle of arrival (AoA) can be estimated. An additional advantage can be obtained if one of the areas or sections uses a non-linear profile to allow a coarser or finer AoA estimation as part of a location algorithm. The concept may be further extended by applying more than one discontinuity and applying discontinuities in two dimensions. Furthermore, the discontinuities are not restricted to straight lines but may take the form of curves or line segments, for example, according to the intended application. All the above concepts are understood to be covered by the term "stacked linear phase".

It will be apparent that profiles with other characteristics may easily be defined by extrapolating from the definitions above. For example, the class of non-linear phase profiles may include those that use different functions in orthogonal axes, including functions that are asymmetric about the center point or which are linear on one orthogonal axis (cylindrical profile). The class of stacked linear phase profiles may include multiple lines of discontinuity, which need not be parallel. Regions bounded by discontinuities may be linear, non-linear or (pseudo-)random as required by the target application. The above phase profiles may be configured to have a "center point" or one or more "center lines" which are defined as follows:

For non-linear phase profiles, the center point may be a stationary point (i.e., maximum or minimum) of the non-linear function. This may or may not correspond to the geometric center of the RIS (or region of the RIS) applying the phase profile and, in some cases, may be a point beyond the physical boundaries of the RIS.

For stacked linear phase profiles, the center line may be a line of discontinuity between the two linear regions (or the single linear region and the non-linear region).

For linear phase profiles, the center point may be a point at the geometric center of the region on the RIS applying the linear phase profile or the center line may be a line crossing the geometric center.

Throughout the disclosed embodiments, a "phase profile design function" is to be understood as a function for designing phase profiles, that can design a suitable phasing matrix that, when implemented by the RIS, causes a specified reflection profile to be applied to incoming beams (such as, for example, divergent reflection). Conceptually, a phase profile design system (PPDS) translates a desired reflection profile to a phase profile that can be implemented by the RIS. The reflection profile may comprise one or more functions and associated parameters. Similarly, the corresponding phase profile may also exhibit corresponding parameters or a set of phase profiles may be created to match the parameters. The translation may be performed using methods like zero-forcing, minimum mean square error and so on. Where a translation cannot be performed deterministically, machine learning methods (for example, genetic algorithms or neural networks). Such methods may also be useful in designing or optimizing reflection profiles for particular use cases.

There are several possible locations for the PPDS. When the PPDS is implemented by the RIS, the base station and RIS controller may exchange reflection profiles and the implementation of the corresponding phase profile may be internal to the RIS. Otherwise, when the PPDS is implemented in the base station or the network, the RIS controller may report hardware capabilities of the RIS (such as RIS size and number and spacing of meta-atoms) to a network entity (such as a gNB) to enable the external design of suitable phase profiles. The RIS controller and the base station may then exchange phase profiles.

There are several possible occasions where reflection and phase profiles are defined. The RIS may be pre-programmed during manufacture, installation or deployment with reflection and phase profiles and may indicate to the base station available reflection profiles for the base station to select from. Or the RIS may be pre-programmed with phase profiles during operation. When the base station requests a reflection profile, the RIS selects the phase profile that best corresponds to it (or, if no such phase profile can be found within a specified margin of error, may indicate a failure). Alternatively, the RIS controller may indicate available phase profiles to the base station and the mapping between desired reflection and phase profiles may be performed on the network side. As a further option, the base station or network may be pre-programmed with a set of reflection profiles that may be optimized for a particular use case and that can be translated by the PPDS (e.g., in a one-time step) to phase profiles. Reflection profile parameters may be changed dynamically with a change in the corresponding phase profile parameter being communicated to the RIS controller, if necessary. As another option, reflection profiles may be created dynamically by the base station or the RIS controller in response to positioning measurements and feedback from a target UE. The PPDS maps these onto phase profiles which are directly implemented by the RIS controller.

Throughout the disclosed embodiments, a "network-controlled repeater" (NCR) is to be understood as a network element under control of the base station, that amplifies and repeats transmissions between the base station and a UE. A multi-element antenna array provided at (e.g., fitted to) the NCR to handle a link between the NCR and the UE (called "access link") may be configured with a beam profile that matches the effect of a RIS reflection profile and that allows the NCR to serve as an alternative to a RIS. An NCR may be designed to amplify/repeat/redirect not only beams from an access device or terminal device (e.g., directed towards the NCR), but also signals which may have an omnidirectional propagation path (e.g., transmitted using an omnidirectional antenna).

Throughout the disclosed embodiments, a "localization function" is to be understood as a function for calculating the location of a target UE (or the RIS during an optional setup stage) according to measurements made by nodes participating in the positioning process. These may include the gNB, the RIS, the target UE and may also include third party nodes that are arranged to make their own measurements of positioning signals. The localization function may consist of known algorithms, including those based on angles of arrival or departure (AoA or AoD), as well as timing (such as time of arrival (ToA), time difference of arrival (TDoA), and the like), as well as having specific modifications (described later) to take best advantage of non-uniform phase profiles applied ("displayed") by the RIS. The localization function may be provided in the network or in the UE or, in some cases, in a third-party device. Locations of fixed nodes like the gNB, the RIS and other available third-party nodes may be known a priori and stored in a location database that is configured to be accessible by the localization function.

Throughout the disclosed embodiments, a "target device" is to be understood as a device, e.g., a 5G UE or other mobile device, whose position or location is to be determined.

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

The following embodiments allow for enhanced network control for a wireless communication involving at least one access point/device (e.g., base station (BS)), at least one Reconfigurable Reflection Device (e.g. RIS) and at least one terminal device (e.g., UE).

More specifically, RISs are seamlessly integrated, e.g., by a BS (e.g., gNB in 5G terminology), into a 5G network via maintenance of a transmission database of a local area (which may include both buildings and objects). The transmission database may include all known RISs and their properties (including operations of RISs and means of controlling them). A resulting 3D radio propagation model may be used, along with some limited local search, for selection of communication channels including both BS beam direction(s) and states of RISs controlled by the network and/or BS.

3GPP specification TR 38.867 for 5G Release 18, 3GPP RAN defines a network-controlled repeater (NCR) that allows considerable control for a base station over the behavior of the NCR. In particular, the base station is allowed to control antenna beamforming at the UE-facing side of the NCR ("access channel"). This functionality allows beam direction and beam width of the NCR to be adjusted by the base station to optimize the link between the NCR and the UE. Since modern antenna panels may support arrays of tens or hundreds of antenna elements, the NCR access channel can be configured with beam profiles that emulate the behavior of or operate/function as or create the RIS non-linear phase profiles described in the following embodiments.

Accordingly, the described embodiments can be implemented with an NCR comprising such an antenna array in place of the RIS. Thus, for the purpose of this disclosure, the term "reflection profile" shall be understood to include an NCR beam profile. As a result, for the purpose of the present disclosure, the term Reconfigurable Reflection Device (RRD) is used where either a RIS or an NCR could be deployed.

The transmission database may be enhanced by automatic discovery (auto-discovery) of user-installed RISs (metasurfaces) within the range of coverage. The RISs can be auto-discovered based on an unexpected measured strength of signals between the BS and a UE (or between two or more BSs), where that would not be expected based on the previous iteration of the transmission database (e.g., a 3D area map) and an UE-reported and/or estimated location. If the properties of the surface are allowed to differ at different times, this may be flagged as reconfigurable. When the BS suspects that a new RIS may have been discovered, it can look up the surface and its properties (and perhaps price for use) in a registration database, and if it is found there, the BS may request control capabilities (e.g., from the owner of the RIS) and integrate it (and its properties and control) into the 3D transmission database (e.g., an updated 3D area map). A RIS may also be discovered if the RIS controller has communication capabilities to register e.g. to the network.

During usage, the BS may perform an analysis of a communication required, locations of users, and/or predictions from its 3D radio propagation model. Then, the BS may use its beam forming capabilities and may actively switch the behavior (e.g., phase profile) of the RISs under its control to maximize communications quality and/or throughput whilst minimizing the transmission power levels.

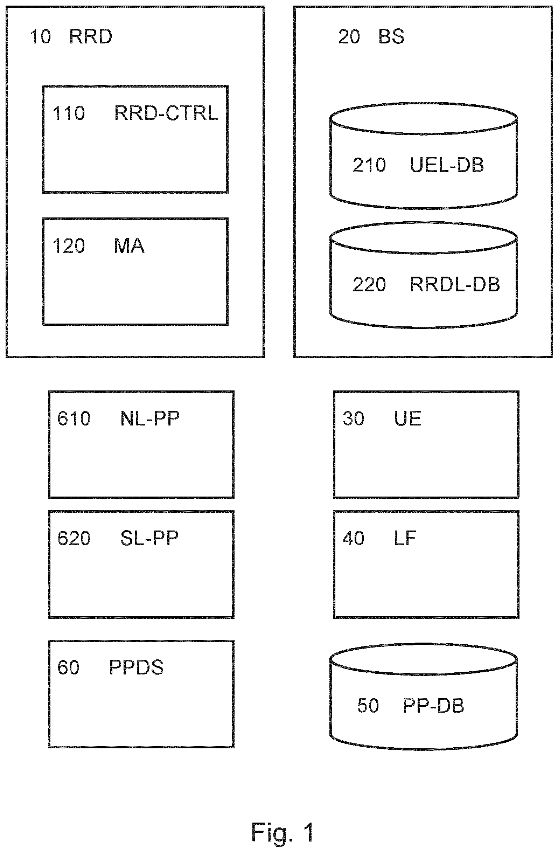

Fig. 1 schematically shows a summarizing architecture of an RRD-aware localization system according to various embodiments.

A reconfigurable redirection device (RRD) 10 comprises a reconfigurable intelligent surface (RIS) or a network-controlled repeater (NCR). Control and network communications of the reconfigurable redirection device 10 are handled by an RRD controller (RRD-CTRL) 110, which may contain standardized communications hardware for receiving control commands from a network or for bidirectional communication with a network (for example, the controller may act as a UE on a 5G network), local processing and memory hardware. Furthermore, the reconfigurable redirection device 10 comprises meta-atoms (MA) 120 for controlling reflection and/or refraction of incident beams or rays.

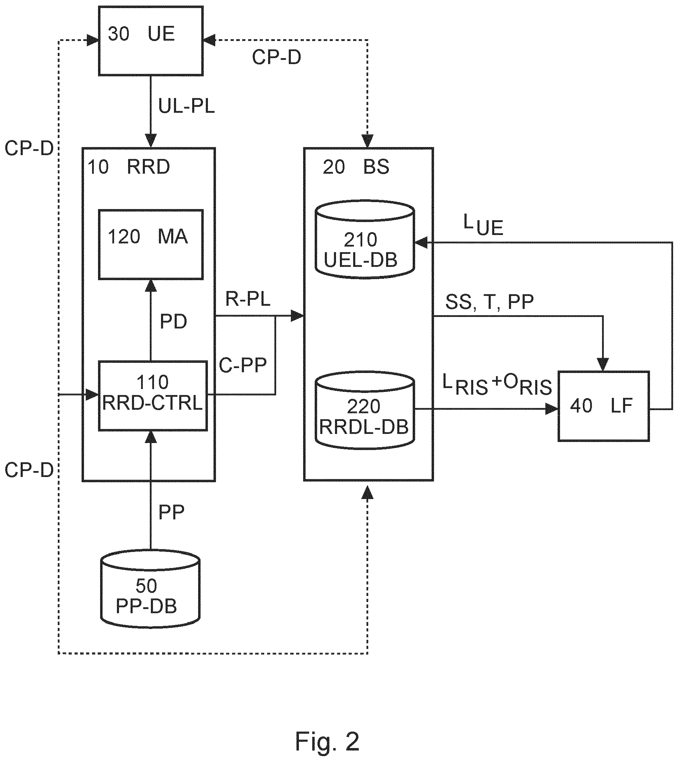

For the method described below in connection with Figs. 2 to 6, RRD metadata is required that may comprise an RRD location, an RIS orientation or NCR access antenna orientation, and (optionally) a straight-line distance to at least one access point (e.g., base station (BS) 20), which may instead be calculated from the RRD and BS locations. This meta data 120 may be manually entered by an installer when the RRD 10 is installed, or else discovered in a one-time setup phase after the RRD 10 is installed using known localization techniques to allow the BS 20 to localize the RRD 10.

The BS 20 (e.g., a gNB) is configured to support network communications and carry out local computing tasks. In addition to its normal functions, the BS 20 includes or is capable of accessing a UE location database (UEL-DB) 210 and/or an RRD location database (RRDL-DB) 220 storing the position/location (and, for RRDs, orientation) of mobile devices (UEs) and RRDs, respectively.

One or more mobile device(s) (e.g., mobile terminal(s) or UE(s)) 30 contain necessary antennas and/or other components for communicating via communications networks such as the 5G System. The UE(s) 30 may contain one or multiple antennas and may or may not be capable of beamforming. In embodiments, at least one UE is a target UE and one or more UEs may provide other UEs with access to the BS 20. In out-of-coverage scenarios, the role of the BS 20 and network for positioning purposes may be performed by a further UE, known as the anchor UE.

Furthermore, the RRD-aware localization system comprises a localization function (LF) 40 as described above, a phase profile design system (PPDS) 60 for providing non-uniform reflection/refraction profiles, such as non-linear phase profiles (NL-PP) 610 and/or stacked linear phase profiles (SL-PP) 620, as described above, and a phase profile database (PP-DB) 50 in which phase profiles of RRDs can be stored.

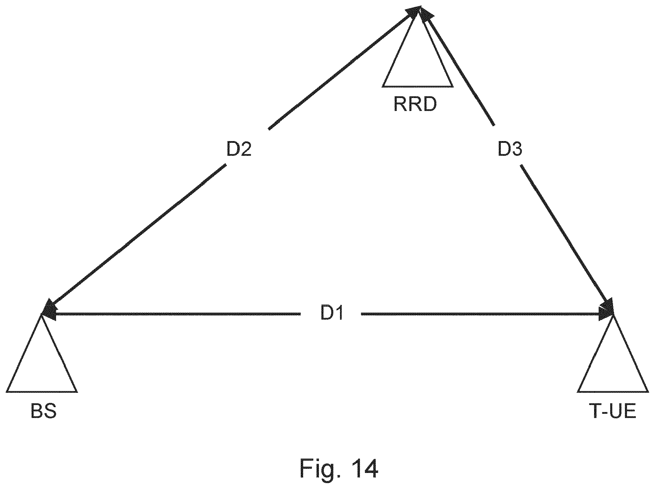

In a basic arrangement, shown schematically in Fig. 14, the base station (BS) and the target UE (T-UE) are separated by a first distance (D1). The RRD is located at a second distance (D2) from the base station and a third distance (D3) from the target UE, with sufficient angular separation from the target UE to allow the base station to differentiate between direct beams to/from the target UE and beams reflected via the RRD. The locations of the base station and the RRD are known and stored in the location database 220, such that the length of the second distance is known and the line between the base station and RRD may serve as a base line for further measurements.

The aim of the proposed localization method is to determine at least the third distance and the azimuth angle subtended at the RRD by the base station and the UE and, if necessary, the elevation angle subtended at the RRD by the target UE and a reference line such as the horizon. In the embodiments below, methods of determining the azimuth angle are disclosed. The third distance may be obtained directly via time-of-flight or similar methods between the RRD and the target UE, or may be indirectly obtained by measuring the angle subtended at the base station by the RRD and the target UE, by performing e.g. a ToF measurement between the base station and the target UE or by changing the focal length or equivalent of the RRD beam towards the target UE to maximize signal strength. The target UE may perform received signal strength (RSS) measurements per beam index (e.g., synchronization signal block (SSB)) and report e.g. RSS per SSB to the base station or the network, and/or may perform other measurements (e.g., AoA, TDOA, signal arrival times) and report these measurements to the base station or the network. Also the RRD may perform measurements, such as signal strength (e.g., RSS per beam), signal departure times (after redirection/reflection) and/or signal arrival times, RRD state information (e.g., which phase profile has been applied, angle information, state/orientation of the RIS atoms or NCR antenna array elements), timing information (e.g. timing advance compared to the gNB's timing), and may report these measurements to the base station or the network. The base station may use the received measurements to adjust the beam steering of the RRD (e.g., by adapting the phase profiles or change the state of the RRD or its atoms/elements) and/or the localization function 40 may use the received measurements to determine angles and/or distances between the base station and/or RRD and/or target UE.

Other measurements may be made with the help of other UEs, RRDs and base stations to reduce uncertainties and eliminate ambiguities.

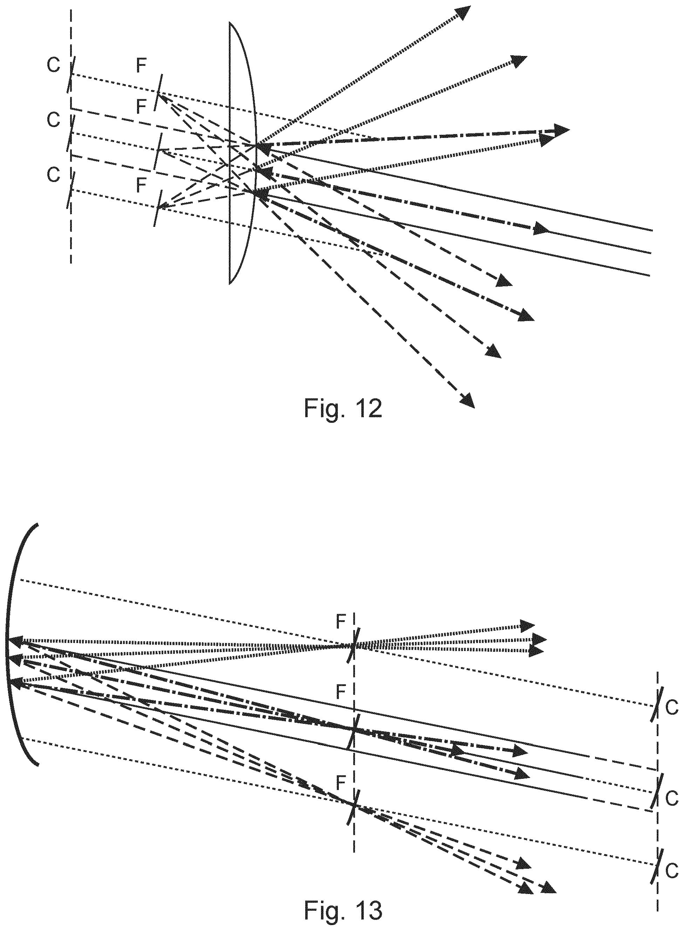

In an advantageous arrangement, a RRD is located relatively close to the target UE. For example, the target UE and the RRD may be located within 5 to 10 m of one another and around 50 to 100 m from the base station. In this arrangement, signals from the base station may be treated as arriving as an approximately parallel beam, as illustrated schematically in Fig. 12 and Fig. 13.

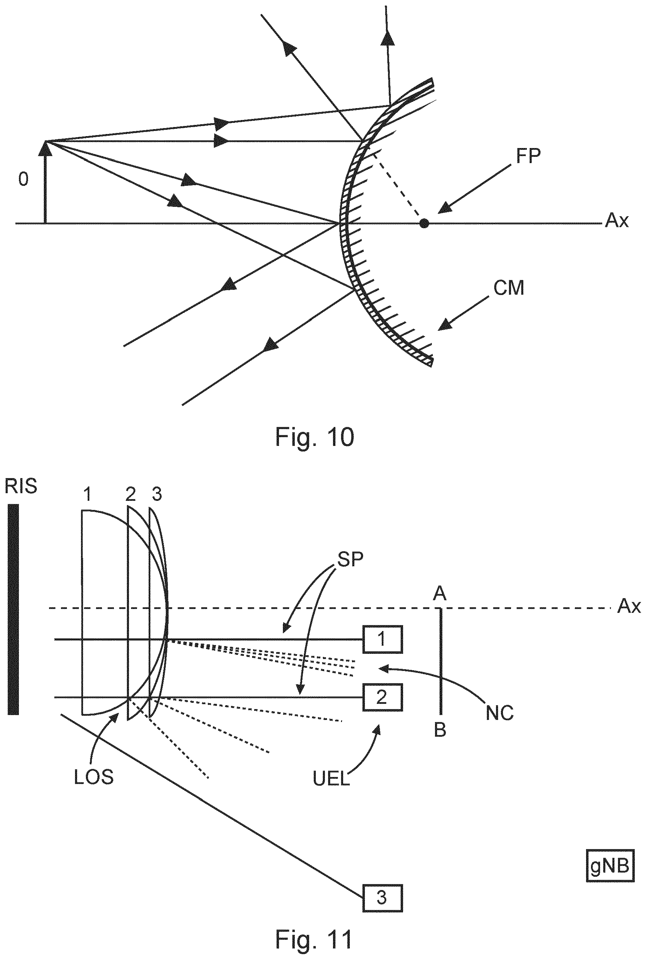

Fig. 10 schematically illustrates how non-parallel rays emitted from an object (O) are reflected from a convex mirror (CM) with a principal focal point (F) and a principal axis (Ax). The principal focal point is located where a ray or beam which is parallel to the principal axis appears to cross the principal axis behind the mirror. This parallel light ray or beam that is reflected by the convex mirror can be projected behind the convex mirror. Non-parallel rays or beams are reflected so that the reflection angle with respect to the normal line of the surface of the convex mirror equals the incident line with respect to the normal line.

In a search operation, the RRD may be configured to emulate a convex spherical mirror as shown in Fig. 12, so that the incoming parallel beam from the base station (solid arrow) is reflected as a divergent beam in different directions (dotted arrows) based on a focal point (F) and according to an adjustment of the location of the center (C) of curvature.

In normal operation, the RRD may be configured as a concave spherical mirror as shown in Fig. 13, to focus the reflected beam onto a target UE at an arbitrary location (dotted arrows), steering again being achieved by changing the location of the center (C) of curvature.

In comparison with an 'anomalous specular mirror' approach, in which the RRD is arranged to behave as a planar mirror with an anomalous angle of reflection, significant gain can be achieved.

While the examples of Figs. 12 and 13 assume a spherical profile, other profiles, such as parabolic or offset parabolic, may be used.

Other geometries can be used for location purposes, which may impact the achievable precision. In particular, when the RRD is located relatively close to the base station instead of the UE, similar channel gain can be achieved, this time treating the beam from the UE as a parallel beam and focusing on the base station. The extra length of the third distance may result in a loss of precision for location purposes but sufficiently accurate beam steering for channel gain.

Fig. 2 schematically shows a process flow diagram of an RIS-aware localization using the architecture of Fig. 1 for enhanced localization in the presence of an RRD 10 by use of non-uniform reflection profiles are described.

The RRD controller 110, the target UE 30 and the BS 20 are configured to communicate data via control plane data (CP-D) of the network system (e.g., 5G system). Furthermore, the target UE 30 transmits uplink pilot signals (UL-PL) or other beacons to the RRD 10. The reflection or refraction characteristic of the RRD 10 has been controlled by the RRD controller 110 by setting up respective phase delays (PD) at the meta-atoms 120 based on suitable phase profiles (PP) retrieved from the phase profile database 50.

Resulting reflected/refracted pilot signals (R-PL) are received by the base station 20 from the RRD 10. Furthermore, the current phase profile (e.g., as retrieved from the phase profile database 50) is transmitted from the RRD controller 110 to the base station 20. At least one of signal strength (SS), timing (T) and phase profile (PP) data is forwarded by the base station 20 to the localization algorithm 40 together with RRD location and orientation data ($L_{RIS}$, $O_{RIS}$) retrieved from the RRD location database 220. Based on the received information, the localization function 40 calculates the location ($L_{UE}$) of the target UE 30.

The proposed enhanced localization may be used to extend existing positioning methods by providing extra information on the location of a target node and, as such, are generally applicable to methods used in 3GPP 4G, 5G, 6G and other wireless standards. In the present embodiments, a 5G system is assumed, where a target UE is connected to a 5G network via a gNB that plays the role of a base station. The base station is assumed to be capable of steering beams substantially towards either the RRD or the target UE such that reception of the beam by the other device is negligible.

In embodiments, advantage is taken of the ability of the RRD 10 to provide non-uniform phase profiles to change the way that RF signals are reflected and thereby improve the quality of the location estimation. Alternatively, an NCR can be configured at the RRD 10 with equivalent beam profiles.

The following embodiments can be implemented based on different capabilities of UEs and different use case scenarios. These may involve at least one of the following different types of non-uniform profiles:

1. Localization with an RRD using a non-linear profile;
2. Localization with UE beamforming near a large RIS;
3. Localization without UE beamforming;
4. Localization with an RIS using a stacked linear profile; and
5. Localization with an RIS using null-steering.

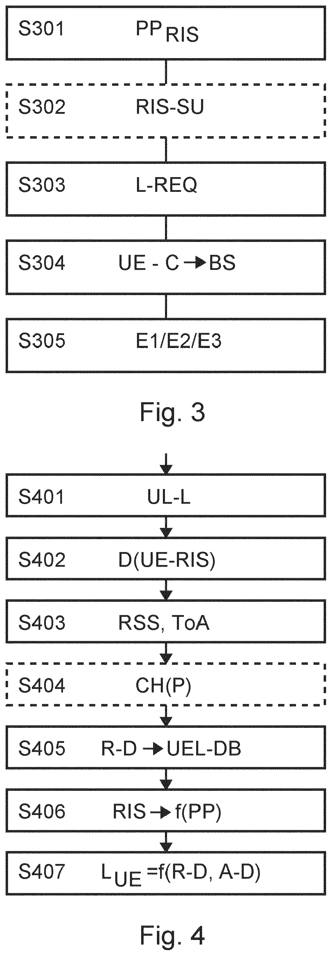

Fig. 3 schematically shows a flow diagram of a common initial part of an RRD-aware localization procedure according to various embodiments.

For all embodiments, some common initiation steps exist:

In an initial step S301, prior to a use of the localization system, a set of reflection profiles and/or corresponding phase profiles ($PP_{RIS}$) to be configured at the RIS/NCR may be created and stored (e.g., by the phase profile design system) in the phase profile database. Optionally, the phase profile design system may run dynamically during the use of the localization system.

Then, in an optional or alternative step S302, a one-time setup stage (RIS-SU) may run on RIS/NCR installation to find parameters including location, angle and distance to the base station. Alternatively, such data may be entered manually by an installing person of the RIS/NCR.

In step S303, a target UE is in the vicinity of a RIS/NCR and a request for localization (L-REQ) is initiated. The localization step may be initiated by the target UE or a base station (e.g., gNB) to which the target UE is connected and that wishes to obtain the position of the target UE or by a location function (LF), for example based on an application or service request received via/from another network service (e.g., Network Exposure Function (NEF) or Gateway Mobile Location Centre (GMLC)).

The base station determines that the target UE is in the vicinity of an RIS/NCR with suitable phase profile capabilities and a suitable RRD controller. If not established yet, the base station may initiate contact with the RRD Controller. More specifically, the target UE or base station may determine that it (i.e., the UE or the base station) is in the vicinity of an RIS/NCR by at least one of the following options:

> i. Approximate localization techniques (such as received signal strength (RSS) or cell-based localization, or non-network-based localization such as a global navigation satellite system (GNSS), which allow prior position knowledge;
> ii. receipt by the target UE or RRD controller of signals from the RRD controller or target UE (respectively) with signal strength above a threshold;
> iii. the base station being able to send or receive signals to or from the target UE in the direction of the RIS/NCR, particularly if the direction is inconsistent with an approximate location determined for the target UE;
> iv. the received signal strength and quality is a function of RIS/NCR states; and
> v. the base station detects significant variations in received signal strength of signals from the target UE when the RRD is in different states.

Furthermore, in some cases, the base station or target UE may assume that the target UE is always in the vicinity of an RIS/NCR (for example, where the target UE is industrial equipment in a factory or other building containing an RIS/NCR, which never leaves the factory/building).

In an example, the RIS/NCR may be directly controlled by the base station using a control plane link or may be controlled locally via the RRD controller.

In step S304, the UE's type and/or capabilities (UE-C) may be communicated to the entity performing logical control (e.g., the base station or the RRD controller).

Finally, in step S305, the base station or RRD controller selects an appropriate embodiment (E1/E2/E3) from those described below depending on the UE's type and capabilities, for example, beamforming ability and wideband vs. narrowband communications ability and/or desired use case. Then, the base station or LF may calculate the approximate location of the target UE and determines the RIS/NCR that is closest. Alternatively, the target UE may itself identify a suitable RIS/NCR and inform the base station.

In the following, available embodiments for selection in step S305 are described with reference to Figs. 4 to 6.

The embodiments include an embodiment for target UEs capable of beamforming, and suitable for UEs capable of wideband communications (since it relies on timing), an embodiment suitable in the absence of beamforming but still suitable for target UEs capable of wideband communications (again due to timing measurements), an embodiment suitable for wideband or narrowband target UEs whether or not they are capable of beamforming (however, the location accuracy is related to the physical size of the RIS/NCR), and an embodiment that uses null steering to provide a precision angular measurement, based on the tendency of the nulls of an antenna radiation pattern to be narrower than the main lobes.

The embodiments described below assume that the RIS/NCR is relatively close to the target UE and relatively far from the base station, such that the beam from the base station to the RIS/NCR can be treated as a parallel beam. In this configuration, the path from the base station to the RIS/NCR resembles the backhaul path from the base station to RIS/NCR backhaul path.

For convenience, the following embodiments assume an RIS but it should be clear that, in practice, an NCR could operate in an analogous manner in terms of beamforming capability. Other geometric arrangements are also possible and not precluded by the embodiments below.

Fig. 4 schematically shows a flow diagram of a subsequent individual part of an RIS-aware uplink localization procedure with terminal beamforming according to a first embodiment.

In this embodiment, the RIS applies a non-linear profile with a known principal axis or center of curvature or other reference point which spreads an impinging parallel beam from the base station (e.g., gNB) over a wide angle sufficient to capture a signal from the target UE. By changing parameters, the width and direction of the reflected beam may be controlled. For example, if the RIS is arranged to emulate (operate/function as, create) a spherical reflector, the reflected beamwidth may be controlled by varying the focal length (e.g., by varying the parameter k) and the beam steered by changing the x- and y-coordinates of the location of the center of curvature in the plane of the RIS surface when projected along the z-axis (perpendicular to the RIS surface) onto the plane of the RIS surface. A profile modelling a convex spherical reflector will produce divergent beams (cf. Fig.

12); a profile modelling a concave spherical reflector will produce convergent beams (cf. Fig. 13) that bring the impinging beam to a focus. In between, a planar profile will allow the RIS to behave as a steerable specular mirror.

The RIS may also be arranged to behave as an aspherical reflector (for example, to display a parabolic profile) or a reflector with an anamorphic or otherwise asymmetric profile while maintaining the ability to vary beamwidth and direction. Such profiles may present other adjustable parameters. For example, a parabolic profile might also allow the direction of the principal axis to be adjusted away from the z-axis.

A practical implementation may support discrete rather than continuous settings. Such implementations may implement changes in steering and/or focus by changes in phase profiles. The parameters k, x, and y may be varied according to a simple list, or alternatively according to some parameter or measurement deriving from a usage scenario (e.g., they may be varied according to frequency of the signaling used).

In step S401, an uplink localization (UL-L) is used, where the target UE to be localized transmits pilot signals or other signals, which may be beamformed towards the RIS and which are reflected by the RIS towards the base station. Using feedback from the base station, the RIS may apply a succession of non-linear profiles and steers each to maximize the received signal strength (RSS) at the base station. Once the azimuth angle of the target UE with respect to the RIS has been determined to a sufficient degree of precision, the distance (D(UE-RIS)) between the RIS and the target UE may be determined in step S402. Additionally or alternatively, the target UE may transmit measurement reports to the base station via the RIS or through a direct communication path between the target UE and the base station. In this case, using feedback from the base station, the RIS may apply a succession of non-linear profiles and steers each to maximize the received signal strength (RSS) at the target UE. Once the azimuth angle of the target UE with respect to the RIS has been determined to a sufficient degree of precision, the distance (D(UE-RIS)) between the RIS and the target UE may be determined in step S402.

In an example, the azimuth search process may be performed as follows:
The localization function determines a range of azimuth angles over which to steer a search beam. It may use auxiliary information giving an approximate location of the target UE to limit the search range required.

Via the base station, the localization function instructs the RIS to apply a non-linear phase profile with a broad beam and steer it across the range of azimuth angles, aiming to maximize the received signal strength (RSS) at the base station and/or the target UE.

The base station tracks RSS measurements precisely against time and, hence, azimuth angle and reports the results to the localization function. Similarly, the target UE may track RSS measurements precisely against time and, hence, azimuth angle and may report the results to the base station and/or the localization function.

The localization algorithm associates an RSS value to a phase profile or azimuth angle by matching the timing of receipt to the timing of the phase profile usage at the RIS.

From the RSS measurements, the localization function determines a second range of azimuth angles to scan, corresponding to, e.g., the 3 dB points bounding the range of maximum RSS.

The localization function then selects a second phase profile with a narrower beam and steers it across the second range of angles, aiming once more to maximize the received signal strength at the base station and/or the target UE.

This process is repeated until the narrowest beam widths have been used or the localization function has obtained a result of sufficient accuracy.

The localization algorithm may strictly use the first arriving signal for its calculations in this step.

If the phase profiles are frequency-dependent, such that the precise values of parameters k, x, and y vary according to the frequency, then embodiments are allowed in which the UE or base station transmits on multiple frequencies at once, each of which is scattered by a different amount. The base station respectively target UE can then determine the strongest frequency and thereby the correct azimuth angle without requiring an explicit steering operation. This may have advantages in terms of processing time, if suitably capable RIS hardware is available.

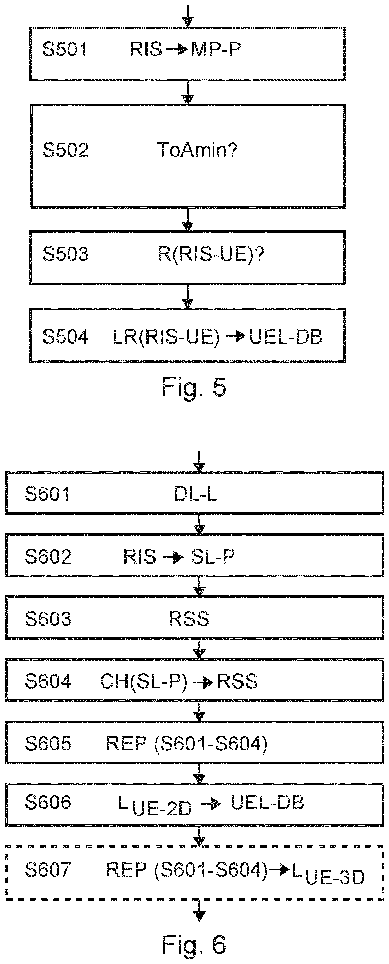

The subsequent determination of the distance corresponding to the shortest path between the target UE and the RIS in step S402 may be based on timing or angle measurements. The latter being described later in connection with the embodiment of Fig. 6. Some exemplary timing-based methods are described as follows:
The ToF for signals over the strongest path from the target UE via the RIS to the base station or vice versa may be measured and the known path length from the RIS to the base station is subtracted from the result.

Where good synchronization exists between the target UE and the base station, the base station may report the ToA of the path with the highest RSS to the localization function in step S403. The UE reports the time of departure (ToD) such that the ToF can be calculated as the difference between the ToD and the ToA. Additionally or alternatively, the base station may report the ToD to the localization function and the target UE may report the ToA of the path with the highest RSS to the localization function.

Where good synchronization is not available, a two-way ranging approach may be appropriate between the UE and the base station.

In case multiple signals are encountered at the RIS, the signal with the shortest path delay may be assumed to be the most direct path between the RIS and the target UE. It may therefore be of value to perform ToF measurements while performing the angle search.

If a direct path exists between the base station and the target UE, the base station may use the signals from the target UE to determine the angular separation between it and the RIS. Alternatively or additionally, the base station may perform a ToF measurement directly with the target UE in order to determine the distance between it and the target UE. Knowing at least any three of the two distances BS-RIS and BS-UE and the two angles BS-RIS-UE and RIS-BS-UE, the localizing function can calculate the distance between the RIS and the target UE.

Auxiliary information from other nodes that receive the signals from the target UE may also be used to help localize it.

Where the target UE is being localized in order to optimize the BS-RIS-UE path, the azimuth search process described above may be extended by including a convergent profile that reflects the beam from the base station onto a focal point. The base station then varies the focal length (e.g., by varying the parameter k described above) aiming for maximum RSS. If necessary, the beam azimuth may be adjusted as part of an iterative process to find the best channel.

In cases where the base station can resolve multiple instances of the signals from the target UE (for example, when multiple peaks in RSS are detected owing to multipath signals arriving at the base station via a strong, static reflector, or a strong line-of-sight (LoS) path), the RIS or base station may attempt to resolve the ambiguity by alternating between two (or more) different phase profiles, of which one is the maximized-RSS signal and the others are known to be lower RSS signals at the base station, at known times. The base station may then identify the group of received (pilot) signals in the timing domain whose intensity and ToA changes in synchrony with the changes in RIS phase profiles and may infer that this corresponds to the signal arriving via RIS-reflected paths. The signal from this group having the highest RSS may then be identified as the initial signal of interest for ranging.

Optionally, in step S404, if there is an ambiguity (e.g., due to multipath reception), the RIS may change its phase profile (CH(P)) to identify in the ToA domain the signal which was reflected at the RIS (since it will be the one where the RSS changes along with the RIS state). The reduction in RSS when the RIS applied a series of changed linear phase profiles may also be used as a calibration check to find whether the RSS is reducing (for example) faster or more slowly than in the linear case.

In step S405, the obtained range (distance) data may be stored in the UE location database.

Then, in step S406, the RIS may apply several divergent phase profiles and the base station and/or target UE may measure the RSS. By a relative drop in RSS at the base station and/or target UE for each phase profile, the base station or LF (e.g. based on the measurements received from the base station and/or target UE) may calculate the UE's angle from the RIS.

More specifically, when a UE with beamforming capabilities is relatively close to a "large" RIS, it may be able to selectively illuminate different parts of the RIS surface. Information on which part of the RIS is being illuminated may be of value when seeking to refine a measurement or to further optimize the UE's beam.

The gain of the propagation path between the RIS and the UE will be a product of the beams of the RIS and the UE. In principle, the direction of the UE beam and, therefore, the point at which it impinges the RIS surface, can be determined by considering the rate of change (reduction) of RSS at the base station during application of various non-linear phase profiles. Using this information, the localization function calculates the distance from the center point at which the signals from the UE arrive at the RIS.

For example, if the reduction in RSS is relatively slow with changing azimuth angle and symmetrical about the point of maximum RSS, then the localization function may determine that the UE signal impinged closer to the center point, while if it changes more rapidly and asymmetrically about the point of maximum RSS, then the localization function may determine that the signal impinged further away. By this means, the location function can make an estimate of the beam angle of the UE.

The precise point distance can be estimated by comparing the trend in RSS to the equation used to generate the phase profile and, if available, the characteristics of the beam used by the UE.

Similar considerations apply for the beam received from the base station.

In step S407, the range data (R-D) and the angle data (A-D) are used to calculate the location of the target UE.

For better communications, the UE beam and the RIS reflection beam should be aligned, that is, the center lines of the two beams should be identical. To correct an error, the location function may cause the UE to update its beam to align it in the direction of the center point of the RIS. Optionally, the RIS may also move the center point of the phase profile to match the point of impingement of the UE beam.

This may be advantageous to further refine the angle estimate, and in specific scenarios (e.g., to localize a UE which is close to a very large RIS by maintaining a mode of operation where the phase profile is not too strongly divergent in the area close to the UE direction, such that the RSS at the base station is maintained at a desirable level).

In this case, the center point position as well as the phase profile applied at each time step is communicated to the localization algorithm.

In a variation of this embodiment, if the RIS appears 'large' to the receiver (i.e., the receiver's beamwidth at the RIS is smaller than the active surface of the RIS), then beam steering may be shared between the receiver-to-RIS beam and the beam deflected by the RIS.

The RIS may perform 'coarse' steering, with the receiver performing 'fine' steering or vice versa.

The RIS may adopt a split profile and the receiver may choose which 'side' to use (which may also depend on the 'side' of the RIS where the base station is located).

Fig. 11 schematically illustrates different phase profiles 1 to 3 and related rates of change of a deflection angle. In Fig. 11, the phase profiles 1 to 3 are exaggerated and offset from the surface of the RIS. In reality, they would be localized on the surface of the RIS. Moreover, the linear offset (LOS) between each of the phase profiles 1 to 3 does not exist. It is merely provided for better understanding of the teaching of the diagram.

The numbers in the rectangular boxes indicate UE locations (UEL) 1 to 3, wherein the solid lines from the UE locations to the phase profiles or RIS indicate the shortest path (SP) between the RIS and the respective UE, which can be initially determined as explained above, to thereby remove AoA uncertainties at the RIS before subsequently measuring the distance over the shortest path.

The UE may be in location 1 or 2 but should not move during the measurement. For the UE in location 3, the principal axis of the RIS would need to be moved towards the UE or the phase profiles would need to be changed to allow proper reflection.

By measuring the rate of change of an RSS at the base station (e.g., gNB) and/or at the target UE when the RIS changes through phase profiles 1 to 3, the base station can calculate the distance of the UE from the principal axis, i.e., the location along the line AB within the field of view of the RIS.

As determined by the continuous non-linear phase profiles 1 to 3, the rate of change (NC) of the reflection angle is smaller when switching between the different phase profiles 1 to 3 the shortest path between the UE and the RIS is near the principal axis (Ax), as given in UE location 1, compared to UE location 2 where the shortest path is near the edge of the RIS.

Fig. 5 schematically shows a flow diagram of a subsequent individual part of an RIS-aware uplink localization procedure without terminal beamforming according to a second embodiment.

In the absence of adequate UE beamforming (where the adequacy of the UE's beamforming may depend on whether the RIS appears 'large' to the UE), an additional step may be taken in order to refine the measurement of path length from the UE to the RIS. In scenarios where this can instead be resolved by angular measurements, the embodiment described with reference to Fig. 6 may optionally replace the steps below to calculate the UE-RIS range.

In step S501, the RIS applies a mixed phase profile (MP-P) with a small beamforming region which attempts to maximize RSS at the base station surrounded by a highly divergent region. The RIS thus attempts to approximately localize the UE by use of a stacked linear phase profile, consisting of the smallest feasible region of a linear phase profile at the center point, surrounded by the highly divergent (or even randomly oriented) phase profile.

Thereby, a situation is created where (pilot) signals from the UE are only received by the base station (or signals from the base station are only received by the UE) when they are reflected from a small region of the RIS in a known location corresponding to a reference point for distance measurements or to determine the region corresponding to the shortest ToA that can then be identified as the approximate point of origin of the shortest path from the target UE to the RIS.

In step S502, (pilot) signals from the target UE at the base station are mainly received from signal paths impinging on the RIS within the beamforming region. This region is moved around the RIS to determine the position, at which the signal with the shortest ToA (ToAmin) from the target UE impinges, via ToA measurements at the base station. Similarly, signals from the base station at the target UE may be mainly received from signal paths impinging on the RIS within the beamforming region. This region is moved around the RIS to determine the position, at which the signal with the shortest ToA (ToAmin) from the base station impinges, via ToA measurements at the target UE.

As already mentioned, an example of a suitable phase profile may include a small region of linear phase profile, surrounded by a random phase profile. The size of the small region may be determined by the number of meta-atoms necessary to ensure good receipt of signals and will therefore be implementation dependent (but may be defined for a particular RIS at manufacture).

The ToF may be measured as in the above first embodiment using feedback from the base station, combined with the known center point location on the RIS of the currently applied phase profile.

Phase profiles with different center points may be applied by the RIS covering its whole surface area, until the ToF is minimized.

In step S503, given the approximate position on the RIS of the signal with shortest ToF from the UE, the range or distance (R(RIS-UE)) between the target UE and the RIS can be determined using techniques previously described, with the known distances between the base station and the RIS beam origin points used to cancel this part of the propagation delay.

Alternatively, the beam reflected by the center point region may be steered to optimize the RSS at the base station or the target UE. The ToF may then be measured using techniques previously described and the distance from the target UE to the RIS center point may be determined by subtracting the known distance between the base station and the RIS center point.

Finally, in step S504, the distance or range between the target UE and the RIS may be stored in the UE location database and the procedure may continue with steps S406 and S407 of Fig. 4 to determine the angle data for location calculation.

Several methods for angle-based localization are expected to be enhanced by using stacked linear phase profiles.

In a third embodiment described below, the stacked linear phase profiles essentially allow the RIS to emulate two RISs with a spatial offset between them, and so perform a known localization technique applicable to two RISs but with the advantage of requiring only one RIS. Advantages of the third embodiment include no requirement for wideband signaling or beamforming from the UE.

Fig. 6 schematically shows a flow diagram of a subsequent individual part of an RIS-aware angle-based downlink localization procedure according to the third embodiment.

In step S601, downlink localization (DL-L) may be used and the base station (e.g., gNB) or an external static UE using device-to-device (D2D) communications transmits pilot signals (which may be omnidirectional or beamformed) which are reflected by the RIS.

In step S602, the RIS applies a stacked linear phase profile (SL-P) with known center point and deflection angle. An example of a suitable phase profile may include two linear phase profiles with a known center point but different deflection angles.

Fig. 9 schematically shows three different stacked linear phase profiles used to provide a moveable center line. In the left portion of Fig. 9, a two-dimensional diagram of the deflection angle Φ over the x-axis is shown for the three different profiles. The right portion of Fig. 9 shows a resultant shift of the center line which can thus be matched to obstacles etc.

In step S603, the receiver (i.e., the target UE for uplink localization or the base station for downlink localization) reports the received RSS. The RIS may be configured to modify the deflection angle of one of the linear regions while holding the other static, to attempt to maximize reported RSS.

Alternatively, the phase profile may consist of a single linear region which is separated at a center point from a region of extremely high divergence, or pseudo-random phase.

In both cases, the effect of the phase profile is such that the RSS optimization of step S603 only applies to signals impinging on the RIS within the (optimizable) linear region, and not elsewhere.

In step S604, the RIS applies another (changed) stacked linear phase profile (CH(SL-P)), where the linear region causes a different deflection angle, and the receiver again reports the received signal strength (RSS) to the RIS. The changed stacked linear phase profile may be similar to the first step but with a changed deflection angle within the linear phase profile region being.

In step S605, the previous steps S601 to S604 are iterated until the deflection angle corresponding to the strongest RSS from a first linear phase profile region with a fixed center point is found. The steps and the iteration are then repeated again, but with a linear phase profile region with a second center point, such that the angle corresponding to the strongest RSS at the UE is found from at least two separate areas of the RIS with known center points.

The center points to be used may be chosen to be as far apart as possible on the RIS surface, with the constraint that the corresponding regions still contain enough meta-atoms to support the display of a robust linear phase profile. The number of meta-atoms required and thus the maximum separation of the center points depends on the specific RIS hardware, and is taken into account by the phase profile design system. It is to be noted that this is distinct from the technique of combining phase profiles to cause multiple simultaneous deflection angles using a single RIS, because here the two deflection angles are constrained to originate from regions on the RIS which are offset in space along the RIS surface by a known amount.

In step S606, the half-lines corresponding to the two angles from the different center points on the RIS which lead to maximum RSS at the UE (as determined in step S605) are intersected to find the location ($L_{UE-2D}$) of the UE in a two-dimensional (2D) space, which is stored in the UE location database.

Optionally, in step S607, the whole procedure of steps S601 to S606 may be repeated on an orthogonal axis to find the location ($L_{UE-3D}$) of the UE in a three-dimensional (3D) space.

Optional additional steps or modifications to the third embodiment may include:

- Use of the UE to be localized as both transmitter and receiver of pilot signals in step S601. This enables self-localization by the UE using the RIS.
- Use of prior setup (e.g., using an installer's UE with well-known ground truth location) to associate given phase profiles applied by the RIS to certain known geographical locations e.g. within a room. This allows the RIS to persistently apply a phase profile which leads to predictable signal strength differences within some area of a room. An example of such a phase profile may be a stacked linear phase profile with a very small difference in deflection angles between two linear regions. This may lead to a narrow region in space at which reflected signals are received from both linear regions, and are therefore maximized.
- The center point and deflection angles of the linear regions may be associated to a desired boundary using feedback from an installer's UE at an installation stage. The UE may therefore easily determine whether it is close to (or has crossed) some boundary, without actually acquiring its location (which is therefore expected to be faster than full localization).

In an additional fourth embodiment, an RIS using null steering is provided, such that the directional pattern of the RIS has nulls (zero reflection) in at least one particular direction. In this embodiment, advantage is taken of the ability of the RIS to reflect an impinging beam into two or more paths. In a basic example, the RIS may be configured to reflect the beam in two directions such that a null (zero reflection) is created between the two beams. During the azimuth search procedure, the beams are steered across the target UE with the base station looking for the point of minimum signal, representing the angle at which the null is pointing directly at the target UE.

The initial beams may be broad to ensure that the drop in signal strength is due to the null and not the edge of one of the beams. The width and depth of the null is a function of beamwidth and angular beam divergence. These may be varied for subsequent azimuth searches in order to create a narrower null and a more precise detection result.

The following variants may be applied to all embodiments described above:

- The RRD controller may not only communicate with the BS (e.g., gNB). In some scenarios, the RRD controller may alternatively or additionally communicate with the target UE.
- In scenarios where a network (and, hence, a BS (e.g., gNB)) is not accessible, a second UE may play the role of the BS and network for positioning/localization purposes.
- The localization function may commission and take into account additional positioning/localization information supplied from or via other UEs, RRDs or other elements.
- Location signals are described as being transmitted by the target UE and received by the BS (e.g., gNB). It is also possible for the target UE to receive signals transmitted by the BS. Taking into account auxiliary information supplied by the BS or otherwise known to the target UE, the target UE may then make its own assessment of its location. Alternatively, it may report the signals it has received to the BS which then performs the location calculation.
- Signals used for positioning/localization may be purpose-designed or may be intended for other purposes. In some cases, purpose-designed signals may present certain features that are advantageous for certain methods of positioning.
- The RRD may be shared between the positioning/localization operation and other services (e.g., normal data transmission) on at least a time-division basis. If the RRD has the capability, it may also be shared on a spatial-division or frequency division basis.
- The target UE may use beamforming to further enhance positioning performance. The beam training required for UE-to-RRD beamforming is assumed to be handled separately e.g. by known conventional techniques.

To summarize, a system and methods have been described, by which at least one reconfigurable redirection device is controlled to apply non-uniform phase profiles to array elements to enhance localization of a target mobile device by creating a non-planar redirection pattern. Use and change of non-uniform phase profiles during the localization task allows discovery of information about the target mobile device location, such as angle or orientation with respect to the reconfigurable redirection device, using fewer transmissions and/or fewer hardware components.

While the invention has been illustrated and described in detail in the drawings and foregoing description, such illustration and description are to be considered illustrative or exemplary and not restrictive. The invention is not limited to the disclosed embodiments. It can be applied to various types of UEs or terminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

The BS may be any network access device (such as a base station, Node B (eNB, eNodeB, gNB, gNodeB, ng-eNB, etc.), access point or the like) that provides a geographical service area.

The RIS may be created by use of smart devices (e.g., a smart TV or a smart Infrared panel) with hardware components (e.g., a large glass screen or panel) which could be regarded as a good reflector. The RIS may also be embedded into an object such as a billboard, building facade, poster, floor tile, roof, wall, etc. Furthermore, in the above embodiments, the RIS may be replaced by a smart repeater or RF repeater or any relay device with a controllable relay or reflection function.

Furthermore, at least some of the above embodiments may be implemented to provide network equipment for 5G/6G/xG cellular networks or a new product class of (low-cost/mid-cost) reconfigurable intelligent surfaces to improve coverage, reliability and speed of cellular networks.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. Throughout the description and the claims, the expressions "at least one of A, B and C" or "at least one of A, B or C" should generally be understood as meaning "A and/or B and/or C". The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

The described operations like those indicated in Figs. 2 to 6 can be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

**Claims**

1. An apparatus (110) for supporting localization of a mobile device (30) in a wireless network, the apparatus (110) being configured to set up a reflection and/or deflection profile of array elements (120) of at least one reconfigurable redirection device (10) in the wireless network to create a non-planar spatial redirection pattern of the at least one reconfigurable redirection device (10).

2. The apparatus (110) of claim 1, wherein the apparatus is configured to set up the reflection and/or deflection profile of the array elements (120) by controlling a spatial phase shift profile of the array elements (120) to obtain a non-uniform spatial phase shift profile.

3. The apparatus (110) of claim 2, wherein the apparatus (110) is configured to control the spatial phase shift profile of the array elements (120) to obtain at least one of a continuous non-linear phase profile and a stacked linear phase profile.

4. The apparatus (110) of claim 2 or 3, wherein the apparatus (110) is configured to control the spatial phase shift profile of the array elements (120) to obtain a non-uniform phase profile with a center point or one or more center lines.

5. The apparatus (110) of any one of the preceding claims, wherein the apparatus (110) is configured to change the reflection and/or deflection profile of the array elements (120) during the localization of the mobile device (30).

6. The apparatus (110) of any one of the preceding claims, wherein the apparatus (110) is configured to dynamically create the reflection and/or deflection profile of the array elements (120) in response to positioning measurements and feedback from the mobile device (30).

7. An access device (20) comprising an apparatus of any one of the preceding claims.

8. A reconfigurable redirection device (10) comprising an apparatus of any one of the preceding claims.

9. The reconfigurable redirection device (10) of claim 8, comprising a reconfigurable intelligent surface or a network-controlled repeater fitted with an antenna array.

10. A location system for localizing a mobile device (30) in a wireless network, the system comprising an apparatus of any one of claims 1 to 7, a localization function (40) for determining a location of the mobile device (30), a phase profile design system (60) for translating a desired non-planar spatial redirection pattern to a spatial non-uniform phase profile that can be implemented by the reconfigurable redirection device (10).

11. The location system of claim 10, wherein the mobile device (30) is configured to use uplink localization and transmit pilot signals towards the reconfigurable redirection device (10) for reflection towards an access device (20) of the wireless network, and wherein the apparatus (110) is configured to use feedback information from the access device (20) to control the reconfigurable redirection device (10) by applying a succession of non-linear phase profiles until a received signal strength at the access device (20) is maximized or minimized.

12. The location system of claim 10, wherein the apparatus (110) is configured to approximately localize the mobile device (30) by applying a stacked linear phase profile consisting of a small region of a linear phase profile at a center point, surrounded by a divergent or randomly oriented phase profile.

13. The location system of claim 10, wherein the apparatus (110) is configured to apply two stacked linear phase profiles with different center points and to determine an intersection of two reflection or deflection angles that lead to a maximum received signal strength at the mobile device (30) to find the location of the mobile device (30).

14. The location system of claim 10, wherein the apparatus (110) is configured to control the reconfigurable redirection device (10) to reflect or deflect an incident beam from an access device (20) of the wireless network in two directions such that a null is created between two beams, and to steer the null across the mobile device (30), wherein a point of minimum received signal strength at the access device (20) represents an angle at which the null is pointing at the mobile device (30).

15. A method of supporting localization of a mobile device (30) in a wireless network, the method comprising setting up a reflection and/or deflection profile of array elements (120) of at least one reconfigurable redirection device (10) in the wireless network to create a non-planar spatial redirection pattern of the at least one reconfigurable redirection device (20).

10 RRD

110 RRD-CTRL

120 MA

20 BS

210 UEL-DB

220 RRDL-DB

610 NL-PP

620 SL-PP

60 PPDS

30 UE

40 LF

50 PP-DB

Fig. 1

Fig. 2

| S301 | PP$_{RIS}$ |
|------|------|

| S302 | RIS-SU |
|------|------|

| S303 | L-REQ |
|------|------|

| S304 | UE - C → BS |
|------|------|

| S305 | E1/E2/E3 |
|------|------|

Fig. 3

| S401 | UL-L |
|------|------|

| S402 | D(UE-RIS) |
|------|------|

| S403 | RSS, ToA |
|------|------|

| S404 | CH(P) |
|------|------|

| S405 | R-D → UEL-DB |
|------|------|

| S406 | RIS → f(PP) |
|------|------|

| S407 | L$_{UE}$ =f(R-D, A-D) |
|------|------|

Fig. 4

| S501 | RIS → MP-P |
|------|------------|

| S502 | ToAmin? |
|------|---------|

| S503 | R(RIS-UE)? |
|------|-----------|

| S504 | LR(RIS-UE) → UEL-DB |
|------|---------------------|

Fig. 5

| S601 | DL-L |
|------|------|

| S602 | RIS → SL-P |
|------|-----------|

| S603 | RSS |
|------|-----|

| S604 | CH(SL-P) → RSS |
|------|----------------|

| S605 | REP (S601-S604) |
|------|-----------------|

| S606 | $L_{UE-2D}$ → UEL-DB |
|------|----------------------|

| S607 | REP (S601-S604) → $L_{UE-3D}$ |
|------|-------------------------------|

Fig. 6

Fig. 7

Fig. 8

Fig. 9

Fig. 10

Fig. 11

C

F

C

F

C

F

Fig. 12

F

F

C

F

C

C

Fig. 13

RRD

D2

D3

D1

BS

T-UE

Fig. 14

Europäisches
Patentamt

European
Patent Office

Office européen
des brevets

# EUROPEAN SEARCH REPORT

**Application Number**

EP 23 19 8775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/176174 A1 (PENNA FREDERICO [FR] ET AL) 8 June 2023 (2023-06-08) | 1,2,7-9, 15 | INV.<br>H04B7/04<br>G01S5/02 |
| A | * paragraphs [0006], [0090] - [0156]; figures 2,5-6A * | 3,4 | |

-----

**TECHNICAL FIELDS
SEARCHED      (IPC)**

H04B
G01S

The present search report has been drawn up for all claims

| Place of search | Date of completion of the search | Examiner |
|---|---|---|
| Munich | 14 March 2024 | Bauer, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

Europäisches
Patentamt

European
Patent Office

Office européen
des brevets

**Application Number**

EP 23 19 8775

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 7-9, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-4, 7-9, 15

   use of different phase profiles
   - - -

2. claims: 5, 6

   changing the reflection profile during measurement
   - - -

3. claims: 10-14

   use of a phase profile design system for translating a desired non-planar spatial redirection pattern to a spatial non-uniform phase profile.
   - - -

## ANNEX TO THE EUROPEAN SEARCH REPORT
## ON EUROPEAN PATENT APPLICATION NO.

EP 23 19 8775

14-03-2024

| Patent document cited in search report | Publication date | Patent family member(s) | | Publication date |
|---|---|---|---|---|
| US 2023176174 A1 | 08-06-2023 | EP | 4143596 A1 | 08-03-2023 |
| | | US | 2023176174 A1 | 08-06-2023 |
| | | WO | 2021221603 A1 | 04-11-2021 |

EPO FORM P0459

**REFERENCES CITED IN THE DESCRIPTION**

**Non-patent literature cited in the description**

- **SYED S. BUKHARI et al.** *A Metasurfaces Review: Definitions and Applications*
- **KUN WOO CHO et al.** *mmWall: A Reconfigurable Metamaterial Surface for mmWave Networks*
- **YONGXU ZHU et al.** *Stochastic Geometry Analysis of Large Intelligent Surface-Assisted Millimeter Wave Networks*
- **JUN ZHAO et al.** *A Survey of Intelligent Reflecting Surfaces (IRSs): Towards 6G Wireless Communication Networks*